# DEMANDE DE BREVET EUROPEEN

(11) **EP 1 498 856 A2**
(43) Date de publication de la demande: **19.01.2005**
(21) Numéro de dépôt: 04024744.7
(22) Date de dépôt: 12.08.1999
(51) Int. Cl.: G07F 7/10

(54) **Procédé de communication entre une station d'utilisateur et un réseau, notamment du type internet, et architecture de mise en oeuvre**

(30) Priorité: 13.08.1998 FR 9810401
(62) Demande divisionnaire de: 99936731.1
(71) Demandeur: CP8 Technologies, 78431 Louveciennes (FR)
(72) Inventeur: Urien, Pascal c/o AXALTO SA Dir. Propr. Intell., 78431 Louveciennes Cedex (FR)
(74) Mandataire: Renault, Patricia Marie Jacqueline

(57) **Abrégé**

La présente invention concerne un système de communication entre un terminal muni d'un lecteur de carte à puce (3), une carte à puce et/ou un réseau de transmission de données (RI), les circuits d'accès au réseau (RI) du terminal étant connectés à la carte à puce par un canal de transmission bidirectionnel (21) et le navigateur (10) du terminal étant connecté à la carte à puce par un canal de transmission bidirectionnel (22a).

## Description

La présente invention concerne un procédé de communication entre une station d'utilisateur et un réseau de transmission d'informations, notamment selon un protocole de type Internet.

Le procédé selon l'invention est plus particulièrement concerné par une station d'utilisateur munie d'un lecteur de carte à "puce" et connectée au réseau précité.

L'invention concerne également une architecture pour la mise en oeuvre d'un tel procédé.

Dans le cadre de l'invention, le terme "station d'utilisateur" doit être compris dans un sens général. La station précitée peut être notamment constituée par un ordinateur personnel fonctionnant sous divers systèmes d'exploitation, tels WINDOWS ou UNIX (tous deux étant des marques déposées). Elle peut être aussi constituée par une station de travail, un ordinateur portable ou un terminal de carte, dit dédié.

De même, dans le cadre de l'invention, le terme "réseau Internet" englobe, outre le réseau Internet proprement dit, les réseaux privés d'entreprises ou similaires, dits "intranet", et les réseaux les prolongeant vers l'extérieur, dits "extranet".

Dans ce qui suit, sans en limiter en quoi que ce soit la portée, on se placera dans le cadre de l'application préférée de l'invention, sauf mention contraire. On considérera donc une station d'utilisateur, que l'on appellera simplement "terminal", munie d'un lecteur de carte à puce et connecté à un réseau de type Internet.

Un système d'application à base de carte à puce comporte généralement les éléments principaux suivants :
- une carte à puce ;
- un système hôte constituant le terminal précité ;
- un réseau de communication, à savoir le réseau Internet dans l'application préférée ;
- et un serveur d'application connecté au réseau.

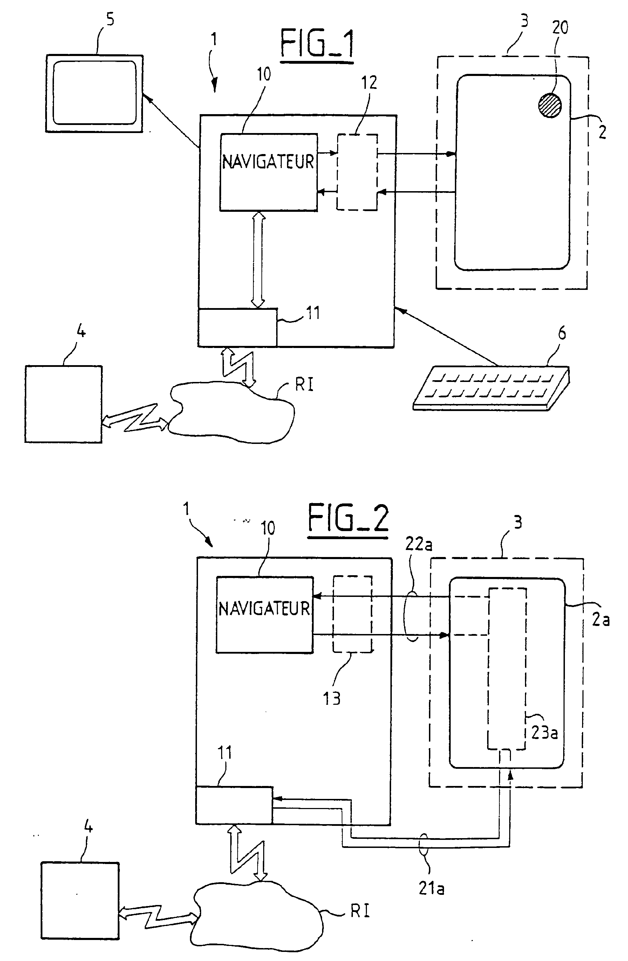

La figure 1 illustre schématiquement un exemple d'architecture de ce type. Le terminal 1, par exemple un ordinateur individuel, comporte un lecteur 3 de carte à puce 2. Ce lecteur 3 peut être ou non physiquement intégré dans le terminal 1. La carte à puce 2 comporte un circuit intégré 20 dont des connexions d'entrées-sorties affleurent en surface de son support pour autoriser une alimentation en énergie électrique et des communications avec le terminal 1. Ce dernier comprend des circuits d'accès à un réseau de transmissions de données *RI*. Ces circuits dépendent, notamment, de la nature du réseau *RI* et du terminal 1. A titre d'exemples, il peut s'agir d'une carte réseau pour un réseau de type local ou d'un modem pour se connecter à une ligne téléphonique commutée ou à un réseau numérique à intégration de services ("RNIS"), pour se connecter au réseau Internet, par exemple via un prestataire de services Internet ("Internet Service Provider" ou "ISP", selon la terminologie anglo-saxonne).

Le terminal 1 comprend naturellement tous les circuits et organes nécessaires à son bon fonctionnement, et qui n'ont pas été représentés dans un but de simplification du dessin : unité centrale, mémoires vive et fixe, mémoire de masse à disques magnétique, lecteur de disquette et/ou de CédéRom, etc.

Habituellement, le terminal 1 est aussi relié à des périphériques classiques, intégrés ou non, tels un écran de visualisation 5 et un clavier 6.

Le terminal 1 peut être mis en communication avec des serveurs connectés au réseau *RI*, dont un seul, 4, est illustré sur la figure 1. Dans le cas de l'application préférée de l'invention, des circuits d'accès 11 mettent le terminal 1 en communication avec les serveurs 4 grâce à un logiciel particulier 10, appelé navigateur, ou "browser" selon la terminologie anglo-saxonne. Celui-ci permet d'accéder à diverses applications réparties sur l'ensemble du réseau *RI*, généralement selon un mode "client-serveur". Le document EP 0 785 534 A1 illustre une architecture carte/terminal/réseau/serveur de ce genre, dans le domaine du téléphone mobile.

Habituellement, les communications sur les réseaux s'effectuent conformément à des protocoles répondant à des standards comprenant plusieurs couches logicielles superposées. Dans le cas d'un réseau *RI* de type Internet, les communications s'effectuent selon des protocoles spécifiques à ce type de communication, qui seront détaillés ci-après, mais qui comprennent également plusieurs couches logicielles. Le protocole de communication est choisi en fonction de l'application plus particulièrement visée : interrogation de pages "WEB", transferts de fichiers, courrier électronique (e-mel, ou "e-mail" selon la terminologie anglo-saxonne), forums ou "news", etc.

Dans un système d'applications à base de carte à puce, comme illustré par l'architecture de la figure 1, cette dernière peut se voir dévolu diverses fonctions. En particulier, elle est utilisée à des fins de sécurité : confidentialité et/ou authentification de l'utilisateur du terminal 1.

Cependant, il est à noter que la carte 3 ne peut communiquer directement avec les navigateurs du commerce, sauf à modifier le code de ces derniers. Les cartes à puce actuelles, qui par ailleurs sont conformes à des standards définis, ont une configuration matérielle et logicielle qui ne permet pas non plus de communiquer directement avec le réseau Internet. En particulier, elles ne peuvent recevoir et transmettre des paquets de données, selon l'un ou l'autre des protocoles utilisés sur ce type de réseau. Il est donc nécessaire de prévoir une pièce de logiciel additionnelle, implantée dans le terminal 1, généralement sous la forme de ce qui est appelé un "plug-in", selon la terminologie anglo-saxonne. Cette pièce de logiciel, qui porte la référence 12 sur la figure 1, effectue l'interface entre le navigateur 10 et la carte 2, plus précisément les circuits électroniques 20 de cette carte 2.

La carte 2 fournit des données au navigateur 10, notamment des données de sécurité : par exemple des données permettant l'identification ou l'authentification, ou encore des données d'autorisation d'accès à tels ou tels serveurs éloignés 4 et/ou applications résidentes sur ces serveurs.

Cette procédure offre un degré de sécurité plus élevé que la simple utilisation des couches logicielles dites sécurisées des navigateurs récents. La carte à puce 2 reste la propriété de l'utilisateur, et sous son contrôle. En particulier, les données de sécurité restent dans la mémoire de la carte 2 et ne sont transmis que sous forme chiffrée au terminal 1. Cependant la chaîne de sécurité présente un "maillon" faible. En effet, le navigateur 10 est en communication avec le monde extérieur. A proprement parler, la communication n'est pas directe, car elle s'effectue via notamment les circuits physiques d'accès 11 et via diverses couches logicielles qui seront décrites ultérieurement de façon plus détaillée. Cependant, le terminal 1 habituellement utilisé pour ce type d'application ne comporte pas de moyens spécifiques, matériels ou logiciels, propres à assurer un haut niveau de sécurité et à l'isoler du monde extérieur. Il reste donc sensible à diverses attaques en provenance du réseau *RI* : "virus", "cheval de Troie", "bombe logique", etc., ce malgré la présence du lecteur de carte 3, et de la carte à puce 2 externe au terminal 1.

Enfin, la carte à puce 2 peut être utilisée pour des applications autres que sécuritaires. Il convient de remarquer que, dans l'état actuel de la technique, le système hôte associé au lecteur de carte 3, c'est-à-dire le terminal 1, est alors associé également à une application particulière. En d'autres termes, il est nécessaire de prévoir un terminal spécifique, dit "dédié", pour chaque application particulière.

Or de nombreux besoins se font sentir pour des applications basées sur l'utilisation de cartes à puces, besoins qui sont imparfaitement ou non satisfaits par les systèmes de l'art connu, dont les caractéristiques principales viennent d'être rappelées. Certains besoins ou exigences peuvent d'ailleurs être antinomiques avec ces caractéristiques.

On peut citer, de façon non exhaustive, les besoins suivants :
- mobilité personnelle : un utilisateur doit pouvoir accéder à des services de communication n'importe où dans le monde, soit à partir de son propre équipement, soit à partir d'un autre équipement acceptant sa carte à puce, ce avec un degré de sécurité déterminé ;
- environnement standard : où que ce soit l'utilisateur doit pouvoir retrouver son environnement de travail, toujours en bénéficiant des conditions de sécurité précitées, c'est-à-dire, en d'autres termes, qu'un changement d'équipement doit rester "transparent" pour l'utilisateur ;
- mobilité du terminal : le terminal lui-même doit pouvoir être transporté et se connecter à n'importe quel endroit du réseau, l'utilisateur continuant à bénéficier de toutes les possibilités (autorisations de consultation, etc.) dont il bénéficie sur son site habituel ;
- multifonctionnalité et standardisation : les terminaux utilisés doivent pouvoir accepter des cartes à puces multiusages, ce qui entraîne qu'ils ne doivent pas être spécifiques ou, pour le moins, nécessiter le téléchargement ou l'implantation de pièces de logiciel additionnelles ("plug-in", etc.), spécifiques à chaque application.

L'invention vise à pallier les inconvénients des systèmes de l'art connu, dont certains viennent d'être rappelés, tout en offrant un grand degré de sécurisation des communications et en satisfaisant les besoins et exigences qui se font sentir dans le domaine.

Selon une des caractéristiques essentielles de l'invention, tout ou partie du flot de données bidirectionnel entre le terminal et le réseau est dérivé par la carte à puce, de façon à isoler le terminal du monde extérieur. Pour ce faire, au moins une partie des couches logicielles précitées des protocoles de communication est implantée dans la carte à puce. En outre, on prévoit une couche de logiciel de communication spécifique dans la carte à puce et son pendant dans le terminal. Le terme "spécifique" doit être entendu comme spécifique au procédé de l'invention. En effet, ces couches de communications, dites spécifiques, sont banalisées quelle que soit l'application considérée. Elles n'interviennent que dans le processus d'échange de données bidirectionnel entre la carte à puce et le terminal, d'une part, et entre la carte à puce et le réseau, d'autre part.

Les couches logicielles de communication spécifiques comprennent notamment des composants logiciels, dits "agents intelligents", permettant en particulier des conversions de protocoles. Il existe des agents appareillés dans les couches de communication spécifiques respectives associées au terminal et à la carte à puce. Selon le procédé de l'invention, il s'établit des sessions entre agents appareillés.

Il s'ensuit, notamment, que les opérations relatives à la sécurité sont entièrement traitées à l'intérieur de la carte à puce et non dans le terminal. La carte à puce ne transmet plus au terminal les clés ou autres données secrètes qu'elle stocke, sous quelle forme que ce soit, même chiffrées comme dans l'art connu (figure 1).

Par contre, selon un autre aspect de l'invention, la carte à puce peut autoriser des liaisons directes entre le terminal, et plus particulièrement le navigateur pour des transmissions de type Internet, et le réseau, par exemple pour des données ne nécessitant pas un traitement sécuritaire (données graphiques ou images décoratives des pages "WEB", etc.).

Selon une autre caractéristique importante de l'invention, la carte à puce présente au système hôte, c'est-à-dire le terminal, un modèle de terminal virtuel, par exemple sous la forme d'une page en langage "HTML" (pour "HyperText Markup Language"), ou plus généralement en langage hypertexte, ou encore sous la forme d'une pièce de logiciel, dite "applet", en langage "JAVA" (marque déposée), ce qui permet à l'utilisateur de choisir une application particulière parmi celles disponibles et proposées par la carte à puce. De ce fait, le terminal se trouve donc banalisé et supporte une pluralité d'applications. Le système hôte est vu comme un périphérique de la carte à puce, et il met à sa disposition des ressources matérielles, tels un écran de visualisation, un clavier, etc.

L'invention a donc pour objet un procédé de communication entre un terminal muni d'un lecteur de carte à puce et un réseau de transmission de données, ledit terminal possédant une première pile protocolaire d'accès au réseau comprenant un nombre déterminé de couches logicielles de communication, et ledit lecteur de carte à puce et ladite carte à puce comprenant des deuxième et troisième piles protocolaires, chacune comprenant au moins des couches de communication logicielles, dites basses, de manière à permettre des échanges de données entre la carte à puce et ledit terminal, caractérisé en ce qu'il comprend une première phase préliminaire consistant à implanter, dans la carte à puce une première pièce de logiciel spécifique, formant interface avec lesdites couches basses de la troisième pile protocolaire et avec au moins une application enregistrée dans la carte à puce, en ce qu'il comprend une seconde phase préliminaire consistant à implanter, dans le terminal, une seconde pièce de logiciel spécifique formant interface avec lesdites couches basses de la deuxième pile protocolaire et avec des couches déterminées de ladite première pile protocolaire, et en ce que lesdites première et seconde pièces de logiciel spécifique comprennent en outre au moins une paire de premières entités logicielles appariées, chacune desdites entités coopérant l'une avec l'autre de manière à permettre l'établissement d'une session d'échanges de données bidirectionnels entre ledit terminal et ladite carte à puce, et/ou ledit réseau, de manière à ce que lesdites données transitent en tout ou partie par ladite carte à puce.

L'Invention a aussi pour objet un procédé de communication entre un terminal muni d'un lecteur de carte à puce et un réseau de transmission de données, ledit terminal possédant une première pile protocolaire d'accès au réseau comprenant un nombre déterminé de couches logicielles de communication, et ledit lecteur de carte à puce et ladite carte à puce comprenant des deuxième et troisième piles protocolaires, chacune comprenant au moins des couches de communication logicielles, dites basses, de manière à permettre des échanges de données entre la carte à puce et ledit terminal, caractérisé en ce qu'il comprend une première phase préliminaire consistant à implanter, dans la carte à puce une première pièce de logiciel spécifique, formant interface avec lesdites couches basses de la troisième pile protocolaire et avec au moins une application enregistrée dans la carte à puce, en ce qu'il comprend une seconde phase préliminaire consistant à implanter, dans le terminal, une seconde pièce de logiciel spécifique formant interface avec lesdites couches basses de la deuxième pile protocolaire et avec des couches déterminées de ladite première pile protocolaire, et en ce que lesdites première et seconde pièces de logiciel spécifique comprennent en outre au moins une paire de premières entités logicielles appariées, chacune desdites entités coopérant l'une avec l'autre de manière à permettre l'établissement d'une session d'échanges de données bidirectionnels entre ledit terminal et ladite carte à puce, de manière à ce que ladite carte à puce présente au dit terminal un modèle de terminal dit virtuel, transformant ladite carte à puce en serveur et/ou client.

L'invention a encore pour objet une architecture pour la mise en oeuvre de ce procédé.

On constate aisément que l'invention présente de nombreux avantages. Elle offre notamment un degré de sécurisation important pour les communications entre le terminal et le réseau. Elle banalise le terminal, ce qui permet à celui-ci de supporter une pluralité d'applications, sans qu'il soit nécessaire de modifier ni la partie matériel du terminal, ni les applications tournant dans ce terminal. Seule l'implantation dans le terminal d'une couche logicielle de communication spécifique est nécessaire, ce qui peut être réalisé une fois pour toutes, ou par chargement en tant que de besoin à partir de sources diverses : disquettes, CédéRom, téléchargement, etc. Elle reste entièrement compatible avec le matériel existant et sa mise en oeuvre. A titre d'exemple, si un utilisateur ne désire pas bénéficier des possibilités et avantages de l'invention, ou s'il ne possède pas une carte à puce conforme à l'invention, il lui est loisible d'utiliser son terminal et le navigateur associé, ainsi que sa carte à puce classique, de façon conventionnelle, c'est-à-dire de la manière qui a été décrite en regard du système de la figure 1.

L'invention sera mieux comprise et d'autres caractéristiques et avantages apparaîtront à la lecture de la description qui suit en référence aux figures annexées, parmi lesquelles :
- la figure 1 illustre schématiquement un exemple de système d'application à base de carte à puce selon l'art connu ;
- la figure 2 illustre schématiquement un exemple de système d'application à base de carte à puce selon un premier aspect de l'invention ;
- les figures 3A à 3C illustrent schématiquement des aspects complémentaires de l'invention ;
- la figure 4 illustre schématiquement l'architecture complète d'un terminal muni d'un lecteur de carte, conforme à l'invention ;
- la figure 5 illustre schématiquement une pile protocolaire de couches de communication conforme à l'invention ;
- les figures 6A et 6B illustrent schématiquement deux exemples d'échanges de données entre une carte à puce, le terminal selon la figure 4 et un réseau externe ;
- les figures 7A à 7D illustrent schématiquement, sous la forme de blocs diagrammes, différentes variantes d'architectures conformes à l'invention ;
- et la figure 8 illustre schématiquement une configuration logicielle particulière de la carte à puce.

Avant de décrire le procédé de communication selon l'invention et de détailler des architectures pour sa mise en oeuvre, il apparaît tout d'abord intéressant de rappeler brièvement les caractéristiques principales des protocoles de communication sur les réseaux.

L'architecture des réseaux de communication est décrite par diverses couches. A titre d'exemple, le standard "OSI" ("Open System Interconnection"), défini par l' "ISO", comporte sept couches qui vont des couches dites basses (par exemple la couche dite "physique" qui concerne le support de transmission physique) aux couches dites hautes (par exemple la couche dite d' "application"), en passant par des couches intermédiaire, notamment la couche dite de "transport". Une couche donnée offre ses services à la couche qui lui est immédiatement supérieure et requiert de la couche qui lui est immédiatement inférieure d'autres services, via des interfaces appropriées. Les couches communiquent à l'aide de primitives. Elles peuvent également communiquer avec des couches de même niveau. Dans certaines architectures, l'une ou l'autre de ces couches peut être inexistante.

Dans un environnement Internet, les couches sont au nombre de cinq, et de façon plus précise, en allant de la couche supérieure à la couche inférieure : la couche d'applications ("http", "ftp", "e-mail", etc.), la couche de transport ("TCP"), la couche d'adressage de réseau ("IP"), la couche de liens de données ("PPP", "Slip", etc.) et la couche physique.

Ces rappels étant effectués, on va maintenant décrire une architecture de système d'application à base de carte à puce conforme à l'invention. Un exemple d'une telle architecture est représenté schématiquement sur la figure 2. Les éléments communs à la figure 1 portent les mêmes références et ne seront redécrits qu'en tant que de besoin. Pour simplifier le dessin, on n'a pas représenté les divers périphériques connectés au terminal (figure 1 : écran 5 et clavier 6, par exemple). Il doit être clair que l'invention ne nécessite aucune modification de la partie matérielle du terminal 1, ni des applications tournant dans celui-ci. Les seules modifications nécessaires seront précisées ci-après.

Selon une première caractéristique importante de l'invention, tout ou partie du flot de données entre le terminal 1 et le réseau *RI* est dérivé par la carte à puce, désormais référencée 2a. Le flot de données continue cependant de passer par les circuits d'accès au réseau 11. En effet, dans l'état actuel des techniques, les cartes à puce, comme il a été indiqué, ne peuvent être connectées directement sur un réseau, notamment du type Internet.

Les circuits d'accès 11 sont connectés à la carte à puce 2a par un canal de transmission bidirectionnel, symbolisé par deux liaisons séries 21a. De même, la carte à puce 2a est connectée au terminal, et plus précisément au navigateur 10, par un canal de transmission bidirectionnel, symbolisé par deux liaisons séries 22a.

De façon plus précise, les canaux 21a et 22a sont disjoints et bidirectionnels, d'un point de vue logique. Des couches logicielles spécifiques 13 et 23a, qui seront détaillées ultérieurement, permettent en particulier d'obtenir, à partir d'une liaison physique unique et du type dit "half-duplex", en l'état actuel de la technique, deux canaux logiques analogues à 21a et 22a.

Pour obtenir un tel fonctionnement, la carte à puce 2a est spécifique à l'invention. Cette spécificité ne concerne pas la structure matérielle, en tout cas pas la configuration externe de la carte et de la puce (non représentée sur la figure 2). La position de cette dernière est définie par des normes, ainsi que les interfaces physique (plages d'entrées-sorties, etc.) et électrique (nature des signaux, etc.).

Par contre, comme il le sera montré ci-après de façon plus détaillée, une pluralité d'applications (non représentées) peuvent être implantées dans la carte à puce 2a. En outre, il est nécessaire d'y implanter une couche de protocole de communication spécifique représentée, sur la figure 2, par la référence 23a.

De façon symétrique, côté terminal 1, il est nécessaire de prévoir une couche de protocole spécifique, représentée schématiquement sous la référence 13, formant le pendant de la couche spécifique implantée dans la carte à puce 2a.

L'architecture qui vient d'être décrite permet, notamment, de traiter toutes les opérations liées à la sécurité à l'intérieur de la carte à puce 2a : authentification, etc. Les données secrètes restent donc confinées dans les circuits de la carte à puce 2a et ne sont plus transmises au terminal 1.

Selon une autre caractéristique importante de l'invention, la carte à puce 2a propose au système hôte, c'est-à-dire au terminal 1, un modèle de terminal virtuel. Pour ce faire, dans l'application préférée, la carte à puce 2a se comporte comme un serveur "WEB".

La carte à puce 2a est "adressée" par le navigateur 10. Elle lui transmet alors une page de type "WEB" en langage "HTML", un "applet" ou tout autre pièce de logiciel. A titre d'exemple, la page "WEB" peut se présenter sous la forme d'une page d'accueil donnant un choix d'applications possibles et/ou d'hyperliens vers des serveurs extérieurs.

De façon pratique, la carte à puce 2a est avantageusement "adressée" par utilisation d'une adresse "URL" (pour "Universal Resource Location") définissant un rebouclage sur le terminal 1 lui-même, et non un pointage sur un serveur externe. A titre d'exemple, la structure de cet "URL" est habituellement la suivante :
http://127.0.0.1:8080 (1), dans la quelle 127.0.0.1 est l'adresse "IP" de rebouclage et 8080 est le numéro de port.

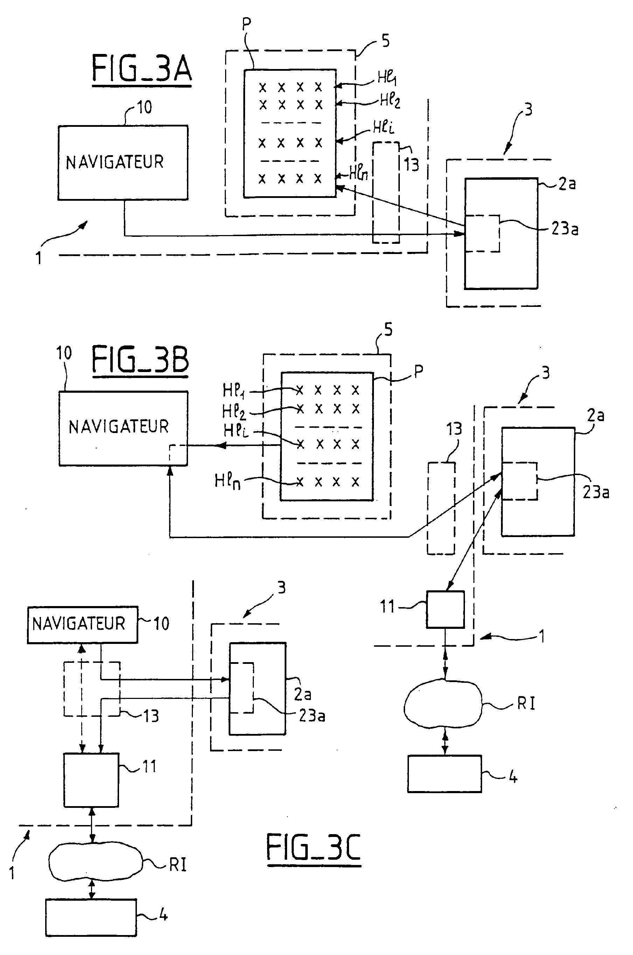

La figure 3A illustre schématiquement ce processus. On suppose sur cette figure, qu'en réponse à la requête du navigateur 10, la carte à puce 2a présente une page *P* en langage "HTML", page affichée par exemple sur l'organe de visualisation 5 du terminal 1. La page *P*, que l'on qualifiera d'accueil, peut afficher, de façon usuelle, différents éléments graphiques ou textes, mais comporte au moins un certain nombre d'hyperliens vers des serveurs externes, *HI*₁, *HI*₂, ..., *HI*_{*i*}, à *HI*ₙ, *i* et *n* étant des nombres arbitraires. *n* représente le nombre maximum de choix possibles. Il est fonction naturellement de la carte à puce 2a insérée dans le lecteur 3. Les choix présentés peuvent dépendre des droits qui sont accordés au possesseur de la carte à puce 2a : abonnement souscrit à des services, niveau d'habilitation, etc. Le processus décrit utilise tout ou partie des couches de communication standards (non représentées), ainsi que les couches spécifiques, 13 et 23a, d'une manière qui sera précisée ultérieurement.

Chaque hyperlien, par exemple l'hyperlien *HI*_{*i*}, pointe sur une ressource "URL" externe. Le processus de communication et d'échange de données entre le terminal 1 et un serveur 4, connecté au réseau RI et contenant la ressource adressée par l' "URL" associée à l'hyperlien *HI*_{*i*}, est illustré par la figure 3B. A titre d'exemple, la structure de l' "URL" peut être la suivante :
http://127.0.0.1:8081/www.NOM.com/index.html (2),
dans laquelle 127.0.0.1 est l'adresse "IP" et 8081 est le numéro de port, "NOM.com" le nom d'un site Internet d'une société ou autre entité, conformément aux règles de nommage habituellement utilisées, et "index.html" la page d'accueil de ce site. En lieu et place du suffixe ".com", a priori utilisé pour des organisations à caractère commercial, il existe d'autres suffixes, tels ".fr", ".gov", etc., qui sont associés à la localisation du site Internet ou à la nature de l'organisme.

Le flot de données entre le terminal 1 et le serveur adressé 4 passe par la carte à puce 2a et les circuits 11 d'accès au réseau *RI* (par exemple un modem). La carte à puce 2a traite notamment les problèmes liés à la sécurité des communications : authentification, vérification de données et filtrage, etc. Comme précédemment, il est fait usage des couches de protocoles de communication standards et spécifiques : 13 et 23a.

Selon un autre aspect de l'invention, la carte à puce 2a peut autoriser des échanges de données directs entre le navigateur 10 ou, de façon plus générale entre le terminal 1, et le réseau *RI* et le serveur adressé 4. Ce processus est illustré schématiquement par la figure 3C. Naturellement, ces échanges de données s'effectuent par l'intermédiaire des circuits 11 d'accès au réseau *RI*. Les données concernées sont avantageusement des données n'ayant pas d'incidence sur la sécurité, par exemple des éléments graphiques ou des images, tels que fonds de page, icônes, etc., ou du texte non "sensible" ou non confidentiel.

Du fait des dispositions propres à l'invention, qui viennent d'être décrites, le terminal 1 est donc bien banalisé et supporte une pluralité d'applications. En outre, si certaines applications nécessitent un protocole de communication particulier, la carte à puce 2a peut présenter au terminal 1 des programmes, sous la forme de scripts en langage "JAVA" par exemple, qui lui indiquent la façon de l'utiliser.

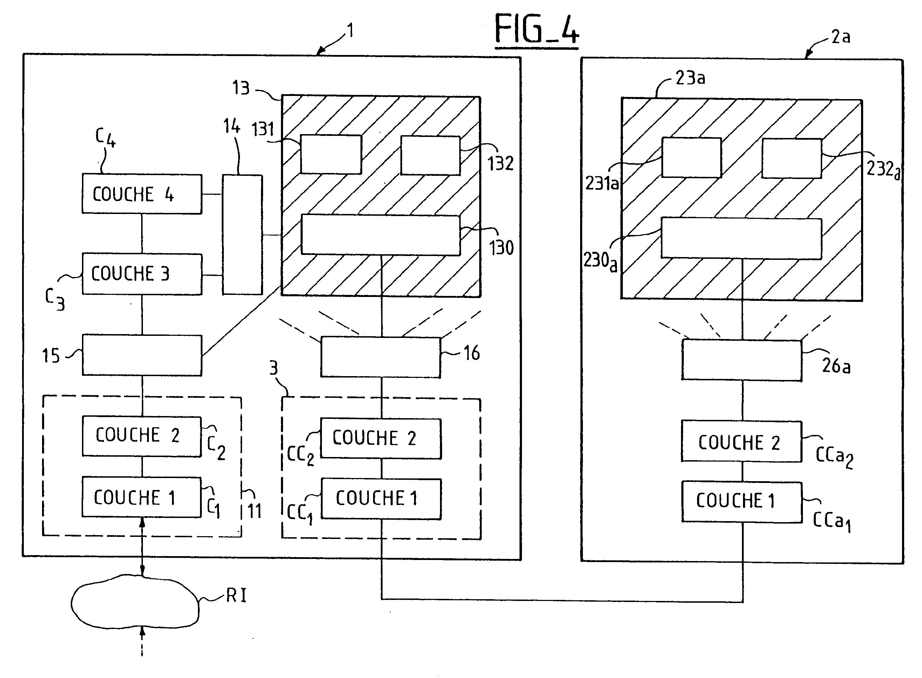

On va maintenant décrire, de façon plus détaillée, un exemple d'architecture pour un système d'application à base de carte conforme à l'invention, par référence à la figure 4.

A l'exception des couches logicielles de protocole de communication spécifiques à l'invention, référencées 13 et 23a, respectivement implantées dans le terminal 1 et la carte à puce 2a, les autres éléments, matériels ou logiciels, sont communs à l'art connu.

Le terminal 1 comprend les circuits 11 d'accès au réseau *RI*, constitués par exemple d'un modem pour le réseau Internet ou d'une carte réseau pour un réseau local. Ces circuits regroupent les couches logicielles inférieures C₁ et C₂, correspondant aux couches "physique" et de "lien de données" précitées.

On a également représenté les couches supérieures C₃ et C₄, correspondant aux couches "d'adressage de réseau" ("IP", dans le cas d'internet) et de "transport" ("TCP"). La couche supérieure d'application ("http", "ftp", "e-mail", etc.) n'a pas été représentée.

L'interface entre les couches inférieures, C₁ et C₂, et les couches supérieures, C₃ et C₄, est constituée par une couche logicielle 15 généralement appelée "driver couches basses". Les couches supérieures, C₃ et C₄, s'appuient sur cette interface et sont mises en oeuvre par l'intermédiaire de bibliothèques de fonctions spécifiques ou bibliothèques réseau 14, avec lesquelles elles correspondent. Dans le cas du réseau Internet, "TCP/IP" est mis en oeuvre au moyen de bibliothèques dites de "sockets".

Cette organisation permet au navigateur 10 (figure 2) de poser des requêtes vers le serveur 4 (figure 2), pour la consultation de pages "WEB" (protocole "HTTP"), pour le transfert de fichiers (protocole "FTP") ou l'envoi de courrier électronique (protocole "e-mail").

Le terminal 1 comprend également le lecteur de carte 3, intégré ou non. Pour communiquer avec la carte à puce 2a, le lecteur de carte englobe également deux couches basses, CC₁ (couche physique) et CC₂ (couche de lien de données), jouant un rôle similaire aux couches C₁ et C₂. Les interfaces logicielles avec les couches CC₁ et CC₂ sont décrites, par exemple, par la spécification "PC/SC" ("part 6, service provider"). Les couches elles-mêmes, CC₁ et CC₂, sont notamment décrites par les normes ISO 7816-1 à 7816-4.

Dans l'art connu (et également dans l'invention), une couche logicielle supplémentaire 16 forme interface entre les couches applicatives (non représentées) et les couches inférieures, CC₁ et CC₂. La fonction principale dévolue à cette couche est une fonction de multiplexage/démultiplexage.

Les communications avec la carte à puce 2a s'effectuent selon un paradigme similaire à celui utilisé pour la manipulation de fichiers dans un système d'exploitation du type "UNIX" (marque déposée) : OUVRIR ("OPEN"), LIRE ("READ"), ECRIRE ("WRITE"), FERMER ("CLOSE"), etc.

Du côté de la carte à puce 2a, on retrouve une organisation similaire, à savoir la présence de deux couches basses, référencées CCa₁ (couche physique) et CCa₂ (couche de lien de données), ainsi qu'une couche d'interface 26a, tout à fait similaire à la couche 16.

Selon une première caractéristique importante de l'invention, on prévoit, de part et d'autre, c'est-à-dire dans le terminal 1 et dans la carte à puce 2a, les deux couches de protocoles spécifiques : 13 et 23a, respectivement.

Dans le terminal 1, la couche 13 s'interface aux "drivers couches basses" 15, aux bibliothèques 14 des couches réseau, C₃ et C₄, et aux couches protocolaires du lecteur de carte 3, c'est-à-dire les couches inférieures, CC₁ et CC₂, via la couche de multiplexage 16. La couche 13 permet le transfert des paquets réseaux de et vers la carte à puce 2a. En outre, elle adapte les applications existantes telles le navigateur Internet 10 (figure 2), le courrier électronique, etc., pour des utilisations mettant en oeuvre la carte à puce 2a.

Du côté de la carte à puce 2a, on retrouve une organisation tout à fait similaire constituée par une instance supplémentaire de la couche spécifique, référencée 23a, pendant de la couche 13.

De façon plus précise, les couches spécifiques, 13 et 23a, sont subdivisées en trois éléments logiciels principaux :
- un module, 130 ou 230a, de transfert de blocs d'informations entre les couches 13 et 23a, via les couches CC₁, CC₂, CCa₁ et CCa₂ ;
- une ou plusieurs pièces de logiciel 132 et 232a, dites "agents intelligents", qui réalisent, par exemple, des fonctions de conversion de protocoles ;
- et un module de gestion de la configuration spécifique, 131 et 231a, respectivement ; module qui peut être assimilé à un agent intelligent particulier.

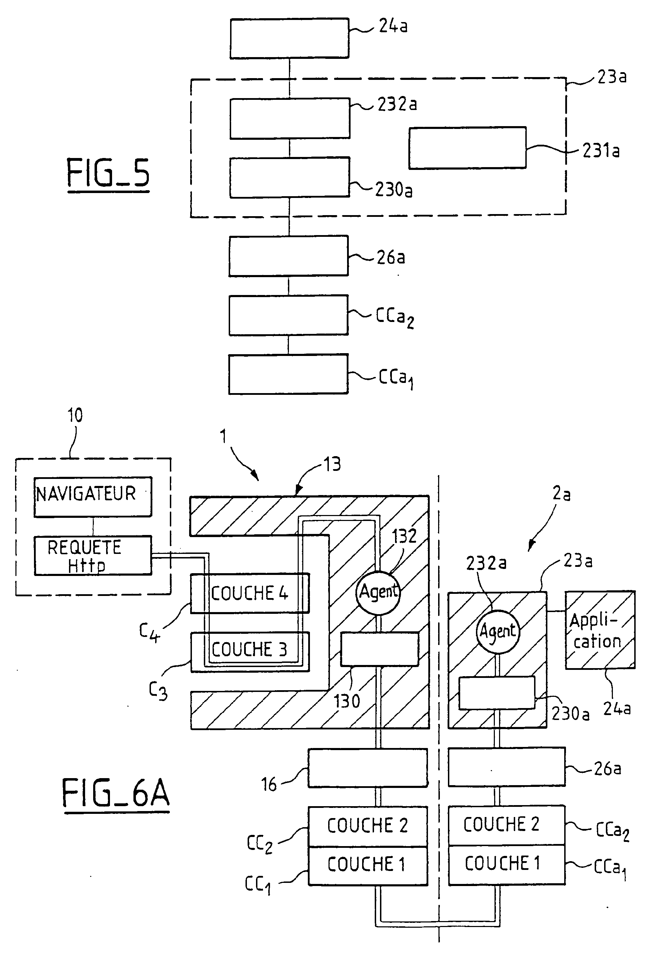

On retrouve donc, dans le terminal 1 et la carte à puce 2a, une pile protocolaire de communication entre les deux entités. La figure 5 illustre la pile protocolaire de communication de la carte à puce 2a, étant entendu que la pile protocolaire de communication du terminal 1 présente une structure similaire.

On trouve, en allant des couches inférieures aux couches supérieures, les couches CCa₁, CCa₂, 26a, 230a, 231a, 232a, précitées et une couche de niveau applicatif 24a. Il doit être entendu que la carte à puce 2a peut comprendre plusieurs applications distinctes.

Les couches de niveau 2 (couches de lien de données), CC₂ et CCa₂, assurent l'échange entre la carte à puce 2a et le terminal 1. Ces couches sont responsables de la détection et l'éventuelle correction d'erreurs de transmission. Différents protocoles sont utilisables, et à titre d'exemples non exhaustifs les suivants :
- la recommandation ETSI GSM 11.11 ;
- le protocole défini par la norme ISO 7816-3, en mode caractère T=0 ;
- le protocole défini par la norme ISO 7816-3, en mode bloc T=1 ;
- ou le protocole défini par la norme ISO 3309, en mode trame "HDLC" (pour "High-Level Data Link Control procedure" ou procédure de commande de liaison à haut niveau).

Dans le cadre de l'invention, on utilisera de préférence le protocole ISO 7816-3, en mode bloc.

De façon connue en soi, à chaque couche de protocole il est associé un certain nombre de primitives qui permettent les échanges de données entre couches de même niveau et d'une couche à l'autre. A titre d'exemple, les primitives associées à la couche de niveau 2 sont du type "demande de données" ("Data.request") et "envoi de données" par la carte ("Data.response"), ainsi que "confirmation de données" ("Data.confirm"), etc.

De façon plus spécifique à l'invention, les couches 13 et 23a sont chargées du dialogue entre la carte à puce 2a et l'hôte, c'est-à-dire le terminal 1. Ces couches permettent l'échange d'informations entre un utilisateur (non représenté) du terminal 1 et la carte à puce 2a, par exemple via des menus déroulants sous la forme d'hypertexte au format "HTML", comme il a été montré au regard des figures 3A et 3B (page *P*). Elles permettent aussi la mise en place d'une configuration adaptée pour l'émission et/ou la réception de paquets de données.

Comme il a été indiqué ci-dessus, les couches comprennent trois entités distinctes.

La première couche, 130 ou 230, est essentiellement constituée par un multiplexeur logiciel. Elle permet l'échange d'informations entre la carte à puce 2a et le terminal hôte 1, sous la forme d'unités de données de protocole. Elle joue un rôle similaire à celui d'un commutateur de paquets de données. Ces unités sont émises ou reçues via la couche de niveau 2 (couche de liens de données). Ce protocole particulier de communication permet de mettre en communication au moins une paire d' "agents intelligents". Le premier agent de chaque paire, 132, est situé dans la couche 13, côté terminal 1, le second, 232a, est situé dans la couche 23a, côté carte à puce 2a. Une liaison entre deux "agents intelligents" est associée à une session. Une session est un échange de données bidirectionnel entre ces deux agents.

Un agent intelligent peut réaliser tout ou partie de fonctions des couches de niveau 3 et 4, en fonction de la configuration mise en oeuvre par le terminal 1.

Un agent intelligent particulier est identifié avantageusement par un nombre entier, par exemple sur 16 bits (nombre compris entre 0 et 65535). Cet identificateur est utilisé, par exemple, dans une unité de donnée de protocole constituant une référence de destination et une référence de source.

Il existe deux grandes catégories d'agents intelligents : les agents de type "serveur", qui sont identifiés par une référence fixe, et les agents de type "client", qui sont identifiés par une référence variable, délivrée par une couche spécifique, 130 ou 230a.

Le processus d'ouverture d'une session est habituellement le suivant : un agent intelligent de type "client" ouvre la session vers un agent intelligent de type "serveur". Les couches 130 et 230a gèrent des tables (non représentées) qui contiennent la liste des agents intelligents présents, côté terminal hôte 1 et carte à puce 2a.

Les agents intelligents sont associés à des propriétés ou attributs particuliers. Pour fixer les idées, et à titre d'exemple non limitatif, les six propriétés suivantes sont associées aux agents intelligents :
- "hôte" : agent localisé dans le terminal ;
- "carte" : agent localisé dans la carte à puce ;
- "local" : agent ne communiquant pas avec le réseau ;
- "réseau" : agent communiquant avec le réseau ;
- "client" : agent qui initialise une session ;
- "serveur" : agent qui reçoit une demande de session.

Dans le cas du réseau Internet, application principale visée par l'invention, les agents clients/serveurs, côté carte à puce, réalisent des protocoles client et/ou serveur qui sont décrits par des spécifications pour commentaires, connues sous le sigle anglo-saxon "RFC" (pour "Reserved For Command"). A titre d'exemple non limitatif, pour le protocole "HTTP 1.1", la spécification est "RFC 2068".

Les agents intelligents permettent d'échanger des données (de l'hypertexte par exemple), mais également de déclencher des transactions réseau.

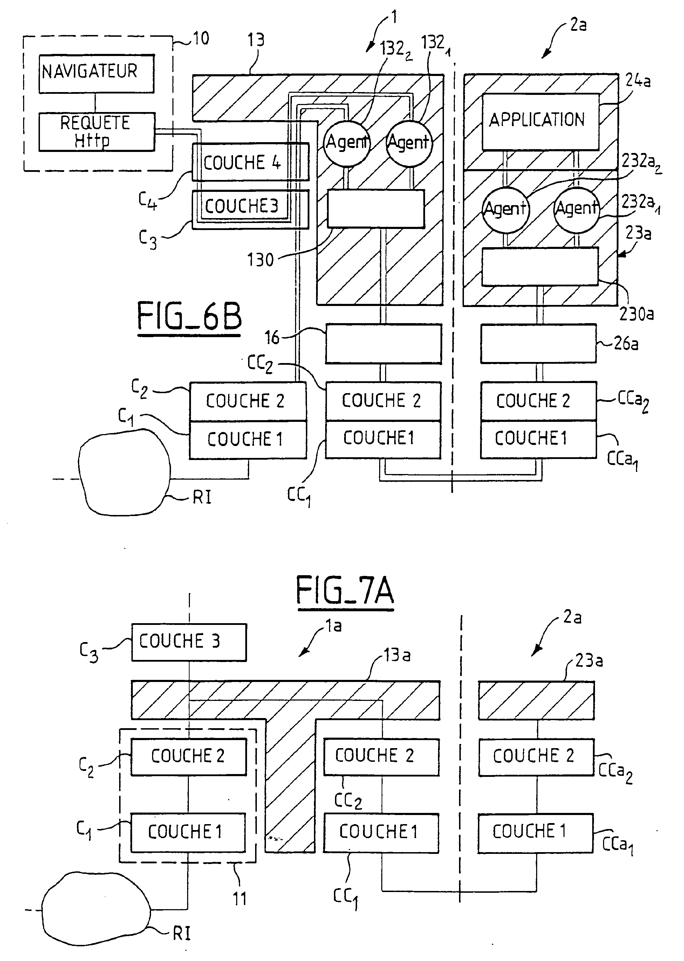

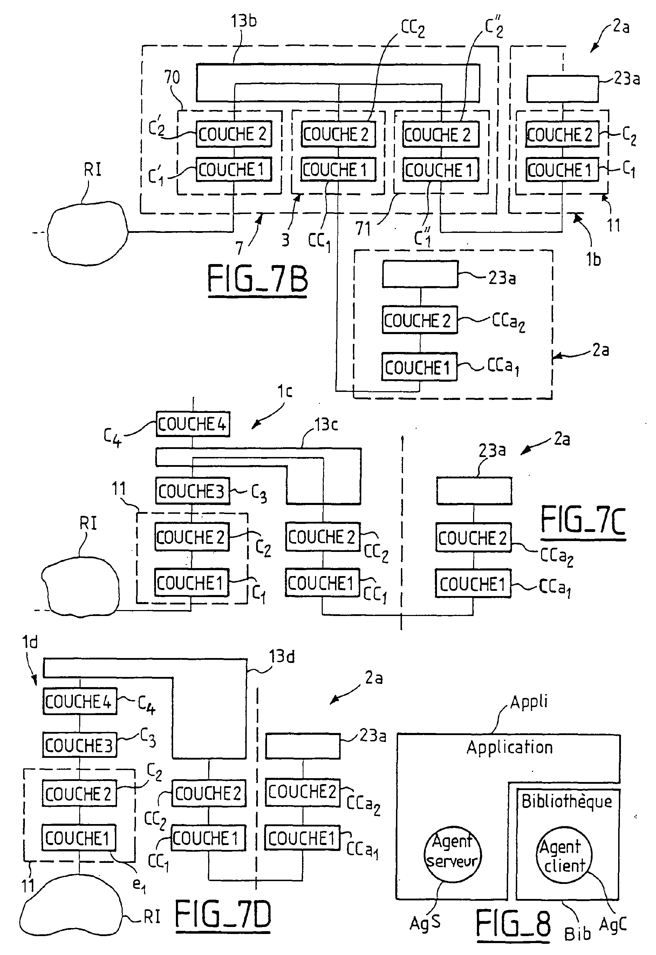

Les modules de gestion de configuration, 131 et 231a, respectivement, sont des agents intelligents particuliers. Par exemple, le module 131, côté terminal hôte 1, gère notamment des informations relatives à la configuration de ce terminal (modes de fonctionnement, comme il le sera précisé à propos des figures 7A à 7D), liste des autres agents présents, etc. Le module 231a, côté carte à puce 2a, a des fonctions analogues. Ces deux agents peuvent être mis en communication l'un avec l'autre pour établir une session.

On va maintenant décrire deux exemples de ces processus par référence aux figures 6A et 6B.

La figure 6A illustre, sous forme de bloc-diagramme, l'architecture correspondant au processus de présentation au terminal hôte 1 d'un modèle de terminal virtuel. Cette figure explicite, de façon détaillée, le processus précédemment décrit au regard de la figure 3A. Les éléments communs aux figures précédentes portent les mêmes références, et ils ne seront redécrits qu'en tant que de besoin.

Le processus décrit nécessite la mise en correspondance d'une seule paire d'agents intelligents, 132 et 232a.

Comme indiqué précédemment, le navigateur "WEB" 10 présent dans le terminal 1 émet une requête "HTTP" impliquant un rebouclage sur lui-même (voir (1)). La requête est transmise à la couche C₄ (couche de transport "TCP"), puis à la couche C3 (couche d'adressage de réseau "IP"). Du fait que l' "URL" implique une adresse "IP" de rebouclage, la requête est renvoyée à la couche C₄ qui la transmet à la couche spécifique, c'est-à-dire à l'agent intelligent 132. Celui-ci ouvre une session avec son pendant dans la carte à puce 2a, c'est-à-dire l'agent intelligent 232a. Il convertit l' "URL" en un format acceptable par les couches 130 et 230a. L'échange de données bidirectionnelles s'effectue au travers des différentes couches des piles : 130, 16, CC₂ et CC₁, pour le terminal 1, et CCa₁, CCa₂, 26a et 230a, pour la carte à puce 2a.

En retour, l'agent intelligent 232a envoie des instructions et/ou données contenues dans la couche applicative 24a. Ces dernières, comme il a été indiqué, peuvent prendre la forme d'une page "WEB" de menu déroulant au format "HTML" (figure 3A : *P*).

Par contre, une connexion "HTTP" avec le réseau *RI* implique la coopération de deux paires d'agents intelligents. La figure 6B illustre schématiquement un tel processus, sous la forme d'un bloc-diagramme. Les éléments communs aux figures précédentes portent les mêmes références et ne seront redécrits qu'en tant que de besoin.

L' "URL" émise par le navigateur est du type de celui décrit par la formule (2) précitée.

Du côté terminal 1, un premier agent intelligent, 132₁, à propriétés de type "local", assure les échanges entre le terminal hôte 1 et un agent 232a₁, situé sur la carte à puce 2a, également à propriétés de type "local".

De même, un second agent intelligent, 132₂, à propriétés de type "réseau", assure les échanges entre un agent, 232a₂, situé sur la carte à puce 2a, également à propriétés de type "réseau", et le réseau *RI*.

Cette connexion met donc en oeuvre deux sessions :
1/ agent local hôte 132₁ ⇔ agent local carte 232a₁,
2/ agent réseau hôte 132₂ ⇔ agent réseau carte 232a₂.

Les couches 130 et 230a assurent notamment un multiplexage/démultiplexage logiciel de façon à aiguiller les données de et vers les agents 132₁ et 232a₁, d'une part, et 132₂ et 232a₂ d'autre part.

Pour la première session, le flot de données traverse les couches du terminal 1 : C₄, C₃, C₄, 13 (agent 132₁ et couche 130), 16, CC₂ et CC₁, et les couches de la carte à puce 2a : CCa₁, CCa₂, 26a, 23a (couche 230a et agent 232a₁), pour atteindre la couche applicative 24a.

Pour la seconde session, le flot de données, à partir de la couche applicative 24a, traverse les couches de la carte à puce 2a : 23a (agent 232a₂ et couche 230a), 26a, CCa₂, CCa₁ et les couches du terminal 1 : CC₁, CC₂, 16, 13 (agent 132₂ et couche 130), C₄ à C₁, avant d'atteindre le réseau *RI*.

On va maintenant décrire plusieurs exemples de configurations possibles, par référence aux figures 7A à 7D. En effet, notamment selon le type de réseau considéré et la nature du terminal, la partition des couches logicielles du protocole de communication peut s'effectuer de différentes manières. Les éléments communs à ces figures et aux figures précédentes portent les mêmes références et ne seront redécrits qu'en tant que de besoin.

Les figures 7A et 7B illustrent schématiquement, sous forme de blocs diagrammes, deux architectures plus particulièrement adaptées à un mode que l'on peut appeler "partage de réseau". Selon ce mode, la carte à puce et le terminal partagent la même adresse, par exemple la même adresse "IP", si le réseau *RI* est du type Internet. Le destinataire final de paquets de données réseau est déterminé en fonction de critères pré-établis.

La figure 7A illustre schématiquement une architecture avec un partage logiciel d'une couche réseau. Le terminal, ici référencé 1 a, possède une couche réseau C₃ (couche adressage réseau). La carte à puce 2a reçoit des paquets réseau adressés au terminal en fonction de certains paramètres (adresse de l'émetteur, etc.). Les paquets sont émis avec l'adresse réseau du terminal 1 a. Comme précédemment, il est prévu deux couches spécifiques, 13a et 23a, situées dans le terminal 1 a et la carte à puce 2a, respectivement. On n'a pas représenté les couches 16 et 26a (figures 6A et 6B).

La figure 7B illustre schématiquement une architecture avec un partage matériel d'une couche réseau. Un dispositif matériel 7 est inséré entre le réseau *RI* et le terminal, ici référencé 1b. Le dispositif 7 permet de recevoir des paquets réseau adressé au terminal 1b en fonction de paramètres particuliers (adresse de l'émetteur, etc.). Les paquets sont émis avec l'adresse réseau du terminal 1b. Le dispositif matériel comporte, par exemple, deux circuits de communication, par exemple du type cartes réseau, 70 et 71, comprenant chacune deux couches inférieures de protocole de communication, C'₁-C'₂ et C"₁-C"₂, respectivement. La carte ou les circuits 70 sont reliés au réseau *RI*. La carte ou les circuits 71 sont reliés aux circuits d'accès au réseau 11, ou de façon plus générale, à la carte de communication, présents sur le terminal 1b. Les communications entre le réseau *RI* et le terminal 1b s'effectuent donc par l'intermédiaire du dispositif matériel 7 incorporant la couche spécifique 13b.

Le dispositif matériel 7 est en outre connecté à un sous-ensemble 3, intégré ou non, de lecture de carte à puce 2a. Ce sous-ensemble lecteur comprend, comme précédemment, les couches CC₁ et CC₂. De même, la carte à puce 2a comprend les deux couches basses CCa₁ et CCa₂ et la couche spécifique 23a.

La figure 7C illustre schématiquement, sous forme de bloc diagramme, une architecture plus particulièrement adaptée à un fonctionnement en mode dit "passerelle".

Selon ce mode, la carte à puce 2a possède une adresse réseau individuelle. Le terminal, ici référencé 1c, se comporte comme une passerelle d'accès de la carte à puce 2a au réseau *RI*. La couche spécifique côté terminal, référencée 13c, est disposée entre la couche C₃ (couche d'adressage réseau) et la couche CC₂. Comme précédemment, la carte à puce 2a comporte la couche spécifique 23a, formant pendant à la couche 13c.

La figure 7D illustre schématiquement, sous forme de bloc diagramme, une architecture plus particulièrement adaptée à un fonctionnement en mode dit "tunnel".

Selon ce mode, le terminal, ici référencé 1 d, ne peut fournir ou partager une couche de niveau 3. La seule méthode possible de communication entre la carte à puce 2a, et le réseau *RI* consiste à établir un "tunnel" où circulent des données applicatives, qui sont éventuellement traduites par un convertisseur de protocole dans la couche spécifique côté terminal, ici référencée 13d. La couche spécifique 13d est disposée entre la couche de niveau 4 (C₄) et une couche applicative (non représentée). Comme précédemment, la carte à puce 2a comporte une couche spécifique 23a, formant pendant à la couche 13d.

Les caractéristiques du terminal et/ou les configurations possibles peuvent être connues par la carte à puce, ou au contraire commandées par celle-ci à l'aide de primitives.

A titre d'exemples non limitatifs, une première primitive, que l'on appellera :
*"TerminalGetConfiguration.request",*
   (obtention de la configuration), émise par la carte à puce, à destination du terminal, permet de lui demander les caractéristiques du terminal et les différentes configurations possibles. La réponse à la question posée est obtenue par une primitive duale :
*"TerminalGetConfiguration.response"*.

Une deuxième primitive, que l'on appellera :
*"TerminalSetConfiguration.request",*
   (commande de configuration), émise par la carte à puce, à destination du terminal, permet de configurer le terminal. La réponse à la commande, véhiculée par une primitive duale :
*"TerminalSetConfiguration.response",* permet d'obtenir toutes les informations nécessaires à une transaction réseau (adresse réseau, configuration, etc.).

Lorsqu'une configuration est disponible, la carte à puce peut recevoir et émettre des données depuis et vers le réseau *RI*. Les données échangées entre la carte à puce et le terminal sont constituées de paquets réseaux lorsque le terminal offre cette possibilité ou des données d'application lorsque le mode tunnel est mis en oeuvre (figure 7D).

Les applications disponibles sur le système hôte de la carte à puce peuvent communiquer avec la carte à puce au moyen de convertisseurs de protocole. Cette fonction est dévolue à des agents intelligents situés dans les couches spécifiques de protocole de communication.

Du côté terminal, les méthodes de communication entre applications et agents intelligents peuvent être diverses, en fonction de la nature du terminal, notamment du système d'exploitation. A titre d'exemples non limitatifs, on peut citer :
- des "API" ("Application Programmatic Interface" ou interface programmatique d'application) ;
- des "DLL" ("Dynamic Link Library" ou bibliothèque à liens dynamiques) ;
- utilisation d'une adresse de boucle, telle l' "URL" (1) précitée.

Enfin, comme illustré schématiquement par la figure 8, un agent intelligent *AgS*, dit serveur, peut être intégré dans une application *Appli* localisée dans la carte à puce. Dans ce cas la référence associée identifie l'application *Appli.* Un agent intelligent *Agc*, dit client, mémorisé dans une bibliothèque *Bib* pourra être utilisé via une "API", par exemple,. Dans une telle configuration, le serveur mémorise des clés et utilise les services du client qui a la connaissance du protocole de communication nécessaire.

Pour résumer ce qui précède, on va maintenant décrire, de façon détaillée, les principales étapes d'un exemple de mise en oeuvre complète :
1/ la carte à puce est introduite dans un lecteur relié à un terminal hôte ;
2/ le terminal hôte émet ce qui est appelé un jeton d'acquittement ;
3/ la carte à puce obtient la configuration du terminal hôte via la primitive :
   *"TerminalGetConfiguration.request"*
   précitée et, en fonction de la réponse, la carte à puce prend l'initiative de l'établissement d'un dialogue ou, au contraire, attend une requête du terminal ;
4/ le terminal obtient un index des fonctions présentes dans la carte à puce via une "URL" de rebouclage : http://127.0.0.1:8080/index.html (voir (1)), par une session du type :
   "HTTP ⇔ Agent intelligent local hôte client ⇔ couche spécifique 130 ⇔ couche spécifique 230 ⇔ Agent intelligent local carte serveur";
5/ à réception, l'utilisateur du terminal sélectionne une des applications disponibles ;
6/ il décide de se connecter à un serveur externe auquel la carte à puce lui donne accès ;
7/ le navigateur génère une "URL", par exemple :
   http:// 127.0.0.1:8080/ www.NOM.com/index.html (voir (2)), transmise à la carte à puce, via un convertisseur de protocole, par une session du type
   "HTTP ⇔ Agent intelligent local hôte client ⇔ couche spécifique 130 ⇔ couche spécifique 230 ⇔ Agent intelligent local carte serveur";
8/ une invite à composer un code d'identification apparaît alors, par une session entre deux agents intelligents d'échanges de données, et le code confidentiel est ensuite transmis à la carte à puce ;
9/ la carte à puce vérifie la validité du code entré à l'étape précédente, en fonction de données de sécurité stockées dans celle-ci ;
10/ une configuration est déterminée pour le terminal et est appliquée à l'aide de la primitive *"TerminalSetConfiguration.request"* précitée ;
11/ la carte à puce se connecte au serveur d'application sélectionné, en fonction de règles édictées par l'application ;
12/ l'utilisateur obtient en réponse à sa requête (du type "HTTP") un accusé de réception ou un fichier en fonction du type de service mis en oeuvre.

A la lecture de ce qui précède, on constate aisément que l'invention atteint bien les buts qu'elle s'est fixés.

Elle présente de nombreux avantages, comme il a été rappelé et notamment les suivants : un degré de sécurisation important pour les communications entre le terminal et le réseau, et la banalisation du terminal, ce qui permet à celui-ci de supporter une pluralité d'applications, sans qu'il soit nécessaire de modifier ni la partie matériel du terminal, ni les applications tournant dans ce terminal. Seule l'implantation dans le terminal d'une couche logicielle de communication spécifique est nécessaire. Elle reste entièrement compatible avec le matériel existant et sa mise en oeuvre. Elle permet une grande mobilité de l'utilisateur et/ou de son terminal, tout en conservant le degré de sécurité précité. Elle offre enfin un confort d'utilisation élevé, car l'utilisateur peut retrouver, sur toute machine acceptant sa carte à puce personnelle, son environnement habituel. On peut parler, à ce sujet, de "domicile virtuel".

Il doit être clair cependant que l'invention n'est pas limitée aux seuls exemples de réalisations explicitement décrits, notamment en relation avec les figures 2 à 8.

Notamment, comme il a été indiqué, les architectures mettant en oeuvre le procédé selon l'invention, et plus particulièrement le découpage et la répartition des couches de protocole de communication entre le terminal hôte et la carte à puce peuvent être diverses.

De même, les exemples d'instructions et de commandes particulières, ainsi que les modes d'interfaçage n'ont été donnés que pour mieux préciser les caractéristiques de l'invention, mais ne sauraient en limiter sa portée.

Il doit être clair aussi que, bien qu'elle soit particulièrement adaptée à des applications dites sécuritaires (authentification, etc.), on ne saurait cantonner l'invention à ce seul type d'applications. Une pluralité d'applications peut être stockée dans la carte à puce, les seules limitations importantes étant la capacité de mémoire de celle-ci, le débit de transmission maximum et la puissance de ses circuits de traitement de l'information (microprocesseur ou microcontrôleur). Il est d'ailleurs à remarquer que ces limitations s'amenuisent avec le temps, en fonction des évolutions technologiques, lesquelles sont particulièrement rapides dans ce domaine.

Enfin, les réseaux auxquels peut être connecté le terminal peuvent être divers (réseaux locaux, réseau Internet, etc.). Il en est de même des protocoles de transmission : protocoles de type Internet, protocole compatible avec le MINITEL (marque déposée), etc.

## Revendications

1. Système de communication entre un terminal muni d'un lecteur de carte à puce (3), une carte à puce et/ou un réseau de transmission de données (RI), les circuits d'accès au réseau (RI) du terminal étant connectés à la carte à puce par un canal de transmission bidirectionnel (21) et le navigateur (10) du terminal étant connecté à la carte à puce par un canal de transmission bidirectionnel (22a).

2. Système de communication selon la revendication 1, **caractérisé en ce que** le canal bidirectionnel est constitué par des couches de protocoles spécifiques (13, 23) interfaçant avec des couches de communication dites basses.

3. Système de communication selon la revendication 1 ou 2, **caractérisé en ce que** la carte à puce est adressée par le navigateur par utilisation d'une adresse URL définissant un rebouclage sur le terminal lui-même.

4. Système de communication selon la revendication 1, **caractérisé en ce que** les couches de logiciel spécifiques (13, 23a) sont subdivisées en trois éléments logiciels principaux :
- un module de transfert de bloc d'informations entre les couches de logiciel spécifiques et les couches protocolaires dites basses (CC1, CC2) ;
- une ou plusieurs pièces de logiciel dit agent réalisant des fonctions de convention de protocole ;
- un module de gestion de configuration spécifique.

5. Système de communication selon la revendication 4, **caractérisé en ce que** la première couche est constituée essentiellement d'un multiplixeur logiciel permettant l'échange d'informations entre la carte à puce et le terminal hôte sous la forme d'unités de données de protocole, chaque première couche de la pièce de logiciel spécifique incorporant un agent intelligent, lesquels réalisent entre eux une session.

6. Système de communication selon la revendication 5, **caractérisé en ce que** les couches (130, 230a) des pièces de logiciel spécifique gèrent des tables qui contiennent la liste des agents intelligents présents respectivement côté terminal et côté carte à puce, ces tables contenant des références fixes pour les agents de type serveur et des références de type variables pour les agents de type client.

7. Système selon la revendication 5, dans lequel une connexion http avec le réseau RI implique la coopération de deux agents intelligents, du côté terminal un premier agent intelligent (132a) à propriété de type local assure les échanges entre le terminal hôte (1) et un agent (232a1) situé sur la carte à puce (2a) également à propriété de type local, un second agent intelligent (1322) à propriété de type réseau assure les échanges entre un agent (2321) situé sur la carte à puce (2a) également à propriété de type réseau et le réseau (RI).

8. Système selon la revendication 5 ou 6 ou 7, **caractérisé en ce que** lesdits agents intelligents (132, 232a) sont associés à au moins l'un des attributs suivants :
- un premier attribut dit « hôte », indiquant que l'agent intelligent est situé dans ledit terminal (1) ;
- un deuxième attribut dit « carte », indiquant que l'agent intelligent est situé dans ladite carte à puce (2a) ;
- un troisième attribut dit « local », agent intelligent que l'agent intelligent ne communique pas avec ledit réseau (RI) ;
- et un quatrième attribut dit « réseau » indiquant que l'agent intelligent communique avec ledit réseau (RI).

9. Procédé mis en oeuvre par le système selon les revendications précédentes, comportant ;
- une étape d'envoi d'une primitive Terminal Get Configuration.request de la carte à puce vers le terminal pour obtenir la configuration du terminal hôte ;
- une étape d'obtention d'un index des fonctions présentes dans la carte à puce via une URL de rebouclage demandant la page d'accueil de la carte à travers une session mettant en oeuvre un agent intelligent local hôte client et un agent intelligent local carte serveur ;
- une étape de réception de l'index des fonctions et de sélection d'une des applications disponibles par l'utilisateur du terminal ;
- une étape de génération par le navigateur du terminal d'une URL comportant le nom du site internet sélectionné, cette URL étant transmise à la carte à puce via un convertisseur de protocole par une cession de type faisant intervenir un agent intelligent local hôte client et un agent intelligent local carte serveur ;
- une étape invitant l'utilisateur à composer un code d'identification et réalisée par une session entre deux agents intelligents d'échange de données, le code d'identification confidentiel étant ensuite transmis à la carte ;
- une étape de vérification de la validité du code entré à l'étape précédente ;
- une étape de détermination de la configuration pour le terminal par l'utilisation d'une primitive terminal set configuration.request ;
- une étape de connexion au serveur d'application sélectionné ;
- une étape d'obtention de la réponse, soit sous forme d'accusé de réception, soit sous forme d'un fichier.
